# EUROPEAN PATENT APPLICATION

(11) **EP 3 903 929 A1**
(43) Date of publication of application: **03.11.2021**
(21) Application number: 19902760.8
(22) Date of filing: 11.11.2019
(51) Int. Cl.: B01J 23/63, B01D 53/94, B01J 27/053, B01J 35/04, B01J 35/10, B01J 37/02, B01J 37/08, F01N 3/10, F01N 3/28

(54) **CATALYST FOR EXHAUST GAS PURIFICATION, METHOD FOR PRODUCING SAME, AND EXHAUST GAS PURIFICATION METHOD USING SAME**

(30) Priority: 28.12.2018 JP 2018247137
(71) Applicant: Umicore Shokubai Japan Co., Ltd., Tokoname-shi Aichi 479-0882 (JP)
(72) Inventor: KUNO, Hirotaka, Kobe-shi, Hyogo 650-0047 (JP); NAKASHIMA, Masashi, Kobe-shi, Hyogo 650-0047 (JP); OGINO, Yuji, Kobe-shi, Hyogo 650-0047 (JP)
(74) Representative: Gilani, Anwar
(86) International application number: PCT/JP2019/044192
(87) International publication number: WO 2020/137200

(57) **Abstract**

[Problem]

To provide a catalyst capable of efficiently purifying HC, CO and NOₓ contained in exhaust gas, a manufacturing method therefor, and an exhaust gas purification method using the same.

[Resolution Means]

An exhaust gas purification catalyst including at least two layers, a lower catalyst layer and upper catalyst layer, on a refractory three-dimensional structure, wherein
the lower catalyst layer and upper catalyst layer independently comprise a precious metal, alumina, and cerium-zirconium composite oxide, and at least a portion of the upper catalyst layer is formed using a manufacturing method including:
applying a slurry for forming the upper catalyst layer onto the lower catalyst layer, the slurry containing a pore connecting agent with a combustion decomposition temperature of 150° C or more to 400° C or less, a precious metal precursor, alumina, and cerium-zirconium composite oxide, the content ratio of the pore connecting agent being less than 20 mass% of the total solid content when heated to 1000° C; and
holding the workpiece in an oxygen containing gas at a temperature above -150° C and +50° C or lower, relative to the combustion decomposition temperature.

## Description

### Technical Field

The present invention relates to a catalyst for purifying exhaust gas emitted from an internal combustion engine, a method for producing the catalyst, and a method for purifying exhaust gas emitted from an internal combustion engine using the catalyst.

### Background of the Invention

Numerous conventional technologies have been proposed for treating exhaust gas generated from internal combustion engines. For the treatment of exhaust gas from gasoline engines, in particular, various technologies have been proposed with the objective of removing hydrocarbons (HC), carbon monoxide (CO), or nitrogen oxides (NOₓ) included in the exhaust gas. For example, an exhaust gas purification catalyst in which a catalyst layer containing a precious metal, magnesium oxide, and a refractory inorganic oxide as catalyst components is formed on a three-dimensional structure and the pore distribution obtained by the mercury intrusion method has two peaks originating from the magnesium oxide has been proposed as a catalyst for purifying exhaust gas (WO 2010/044453 (corresponding to US 2011/0200506) hereinafter Patent Document 1).

### Summary of the Invention

### Technical Problem

In the conventional catalyst described in WO 2010/044453, the catalyst layer includes magnesium oxide and two types of pores which are formed in the catalyst layer by the magnesium oxide, relatively large pores (1 ^{∼} 5 *µ*m) as well as relatively small pores (0.1 to 1 *µ*m). According to Patent Document 1, in particular, the relatively large pores (1 ^{∼} 5 *µ*m) formed in the catalyst layer improve the diffusion of the exhaust gas and enable efficient purification of harmful components in the exhaust gas, such as HC, CO, and NOₓ.

However, as regulations for exhaust gas are tightened, catalysts having higher exhaust gas purification performance are being required.

In consideration of the circumstances described above, an object of the present invention is to provide a catalyst capable of purifying HC, CO, and NOₓ included in exhaust gas more efficiently than conventional technology, a production method therefor, and an exhaust gas purification method using the same.

### Solution to Problem

The present inventors conducted diligent research to solve the problem described above. As a result, the present inventors discovered that the problems described above can be solved by the following means, and thus the present invention was achieved.

In other words, a first aspect of the present invention relates to an exhaust gas purification catalyst including at least two layers, a lower catalyst layer and upper catalyst layer, on a refractory three-dimensional structure, wherein
the lower catalyst layer and upper catalyst layer independently comprise a precious metal, alumina, and cerium-zirconium composite oxide respectively, and at least a portion of the upper catalyst layer is formed using a manufacturing method including:
applying a slurry for forming the upper catalyst layer onto the lower catalyst layer, the slurry comprising a pore connecting agent with a combustion decomposition temperature of 150° C or more to 400° C or less, a precious metal precursor, alumina, and cerium-zirconium composite oxide, the content ratio of the pore connecting agent being less than 20 mass% of the total solid content when heated to 1000° C; and
holding the workpiece in an oxygen-containing gas at a temperature above -150° C and +50° C or lower, relative to the combustion decomposition temperature.

A second aspect of the present invention relates to an exhaust gas purification catalyst containing at least two layers, a lower catalyst layer and upper catalyst layer, on a refractory three-dimensional structure, wherein the lower catalyst layer and upper catalyst layer independently comprise a precious metal, alumina, and cerium-zirconium composite oxide, and the ratio of the average thickness of the upper catalyst layer to the average thickness of the lower catalyst layer is 0.9 or more to 2.0 or less.

A third aspect of the present invention relates to a method for manufacturing an exhaust gas purification catalyst containing: a step of forming a lower catalyst layer by applying a slurry for the lower catalyst layer comprising a precious metal precursor, alumina, and cerium-zirconium composite oxide onto a refractory three-dimensional structure and performing heat treatment; and a step of applying onto the lower catalyst layer a slurry for an upper catalyst layer, the slurry comprising a pore connecting agent with a combustion decomposition temperature of 150° C or more to 400° C or less, a precious metal precursor, alumina, and cerium-zirconium composite oxide, the content ratio of the pore connecting agent being less than 20 mass% of the total solid content when heated to 1000° C, and
holding the workpiece in an oxygen-containing gas at a temperature above -150° C and +50° C or lower, relative to the combustion decomposition temperature, and then calcining.

A fourth aspect of the present invention relates to a method of exhaust gas purification using an exhaust gas purification catalyst described above or an exhaust gas purification catalyst manufactured using the method of manufacture described above to purify exhaust gas including phosphorus compounds.

### Brief Description of Drawings

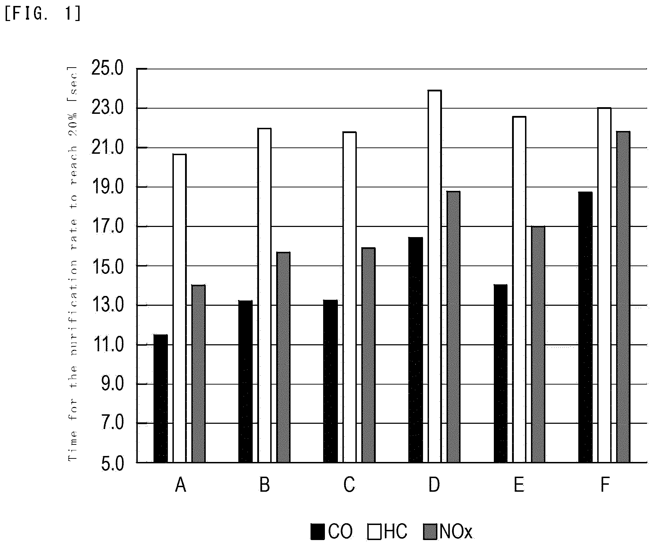

FIG. 1 is a graph showing the time for the catalyst to reach T20 for the examples and comparative examples.

### EMBODIMENTS OF THE INVENTION

The following is a description of embodiments of the present invention, but the present invention is not limited to the following embodiments. In this specification, "exhaust gas purification catalyst" is also referred to simply as "catalyst". Also, "A to B" in this specification means "A or more to B or less".

### <Exhaust Gas Purifying Catalyst>

### (First aspect)

A first aspect of the present invention relates to an exhaust gas purification catalyst including at least two layers, a lower catalyst layer and upper catalyst layer, on a refractory three-dimensional structure, wherein the lower catalyst layer and upper catalyst layer independently comprise a precious metal, alumina, and cerium-zirconium composite oxide respectively, and at least a portion of the upper catalyst layer is formed using a manufacturing method including:
applying a slurry for forming the upper catalyst layer onto the lower catalyst layer, the slurry comprising a pore connecting agent with a combustion decomposition temperature of 150° C or more to 400° C or less, a precious metal precursor, alumina, and cerium-zirconium composite oxide, the content ratio of the pore connecting agent being less than 20 mass% of the total solid content when heated to 1000° C; and
holding the workpiece in an oxygen-containing gas at a temperature of -150° C to +50° C relative to the combustion decomposition temperature.

The exhaust gas purification catalyst according to the present aspect can efficiently purify HC, CO, and NOₓ included in exhaust gas by having the configuration described above. Although the mechanism by which the catalyst according to this aspect produces such an effect is not certain, the inventors speculate as follows. Note that the present invention is not limited to the following mechanism.

A primary characteristic of the catalyst according to this aspect is that at least a portion of the upper catalyst layer is formed using a specific manufacturing method. In other words, the catalyst according to this aspect contains an upper catalyst layer formed by applying a slurry for forming an upper catalyst layer including a pore connecting agent, a precious metal precursor, alumina, and a cerium-zirconium composite oxide having a combustion decomposition temperature of 150° C to 400° C, and then holding the workpiece in an oxygen-containing gas at a temperature above -150° C and +50° C or lower, relative to the combustion decomposition temperature. Here, the pore connecting agent, which will be described in more detail below, is an organic material that produces carbon dioxide and water vapor upon combustion and decomposition. When a coating layer containing a pore connecting agent having a specific combustion decomposition temperature is held at a specific temperature, the pore connecting agent combusts and decomposes to produce a gas mass. Furthermore, the gas mass is considered to form pores in the catalyst layer that are suitable for exhaust gas purification. In more detail, small pores derived from alumina and cerium-zirconium composite oxides, medium-sized pores formed during the reduction of the precious metal precursor to a precious metal, and large pores formed by gas mass generated by combustion and decomposition of the pore connecting agent are connected. As a result, the balance of diffusion and retention of exhaust gas is favorable, and it is assumed that this is why the exhaust gas purification performance is improved over that of a conventional catalyst.

### (Second aspect)

A second aspect of the present invention relates to an exhaust gas purification catalyst containing at least two layers, a lower catalyst layer and an upper catalyst layer, on a refractory three-dimensional structure, wherein the lower catalyst layer and upper catalyst layer independently comprise a precious metal, alumina, and cerium-zirconium composite oxide, and the ratio of the average thickness of the upper catalyst layer to the average thickness of the lower catalyst layer is 0.9 or more to 2.0 or less. The exhaust gas purification catalyst according to the present aspect can efficiently purify HC, CO, and NOₓ included in exhaust gas by having the configuration described above.

Preferred embodiments of the exhaust gas purifying catalysts of the present invention are described below. The following preferred embodiments apply commonly to each of the first and second aspects of the catalyst, unless otherwise noted.

The catalyst of the present invention preferably has at least one of the following features (i) to (iii), and more preferably has at least two of the features (i) to (iii) (features (i) and (ii), features (ii) and (iii) or features (i) and (iii)) and even more preferably to has all features (i) to (iii). (i) The upper catalyst layer has an inlet side upper catalyst layer and an outlet side upper catalyst layer, and the ratio of the total amount of alumina and cerium-zirconium complex oxide contained per unit of length of the outlet side upper catalyst layer to the total amount of alumina and cerium-zirconium complex oxide contained per unit of length of the inlet side upper catalyst layer is 0.8 to 1.2. (ii) The ratio of the thickness of the outlet-side upper catalyst layer to the thickness of the inlet-side upper catalyst layer is preferably 0.5 to 3.9, more preferably 1.1 to 3.9, even more preferably 1.0 to 2.5, and most preferably 1.2 to 1.5. (iii) The precious metal included in the upper catalyst layer is a combination of platinum and/or palladium and rhodium. This type of catalyst layer makes it easier for air to remain in the upper catalyst layer on the outlet side, resulting in higher thermal insulation. If the outlet side upper catalyst layer does not readily warm up, the inlet side upper catalyst layer will warm up more readily than the outlet side upper catalyst layer, which does not readily warm up, if a certain level of heat is applied from the exhaust to the catalyst of the present invention. As a result, the catalyst of the present invention has improved warm-up characteristics compared to conventional catalysts. warm-up characteristics indicate the propensity of the catalyst itself to warm up.

As long as at least a portion of the upper catalyst layer is obtained by the aforementioned manufacturing method, the catalyst according to the first aspect is not restricted in terms of the manufacturing method for other portions of the upper catalyst layer and the lower catalyst layer. The pore size and pore distribution of the pores included over the entire catalyst can be measured by known techniques such as the mercury intrusion method. However, measuring the pore size and pore distribution for only a portion of the catalyst layer in the catalyst is impossible or impractical, even with the analytical methods known at the time of filing. Although peeling off only the upper catalyst layer from the three-dimensional structure is feasible, the pore structure of the refractory three-dimensional structure is lost the instant this is removed. Even if each catalyst layer is measured using a known technique, such as the mercury intrusion method, without peeling off each catalyst layer, the pore distribution in only a section of the catalyst layers in the catalyst cannot be obtained. For example, it is impossible to have mercury intrude only into the upper catalyst layer, and intrusion is performed on both the upper and lower catalyst layers. Therefore, distinguishing the pores in the upper catalyst layer from those in the lower catalyst layer using known techniques such as the mercury intrusion method is not possible.

Each of the constituent requirements of the catalyst of the present invention will be described in order below.

### Refractory Three-Dimensional Structure

The refractory three-dimensional structure functions as a carrier for the catalyst layer described below. The refractory three-dimensional structure as normally used in the field may be used without restriction. As examples of the refractory three-dimensional structure, carriers such as a honeycomb carrier having channels (gas passage openings, cell shapes) that are of triangular shape, rectangular shape, or hexagonal shape can be used. The refractory three-dimensional structure is preferably an integrally molded type. For example, a monolith carrier, a metal honeycomb carrier, a punched metal, or the like may be preferably used.

Example of the refractory three-dimensional structure preferably include materials such as cordierite, mullite, alumina, *α*-alumina, silicon carbide, silicon nitride, and the like, and cordierite materials (cordierite carriers) are particularly preferable. In addition, an integral structure formed using an oxidation-resistant, refractory metal including stainless steel, an Fe-Cr-Al alloy, or the like may be used.

These monolith carriers are produced using an extrusion molding method, a method of winding and solidifying a sheet-like element, or the like. The channels can be adequately used as long as the cell density (number of cells/unit cross-sectional area) is 100 to 1200 cells/square inch; the cell density is preferably 200 to 900 cells/square inch, more preferably 350 to 900 cells/square inch, and even more preferably 400 to 900 cells/square inch (1 inch=25.4 mm).

### [Lower and upper catalyst layers]

The lower catalyst layer is positioned on the refractory three-dimensional structure. Although the catalyst may have other catalyst layers between the lower catalyst layer and the refractory three-dimensional structure, the lower catalyst layer is preferably provided directly above the refractory three-dimensional structure (the lower catalyst layer is adjacent to the refractory three-dimensional structure).

The lower catalyst layer includes a precious metal, alumina, and cerium-zirconium composite oxide, and may optionally include other components.

The upper catalyst layer is positioned above the lower catalyst layer. The upper catalyst layer is preferably provided directly above the lower catalyst layer (the upper catalyst layer is adjacent to the lower catalyst layer), although other catalyst layers may be present between the upper catalyst layer and lower catalyst layer. The upper catalyst layer is preferably provided as the top surface layer of the catalyst (the side in direct contact with the exhaust gas). With this embodiment, the exhaust gas diffuses into and is efficiently retained in the upper catalyst layer (or further into the lower catalyst layer), so that the effect of the present invention (effect of improving the contact efficiency with the exhaust gas) can be more remarkably exhibited. In other words, the catalyst layer of the present invention is preferably composed of two catalyst layers (substantially without a catalyst layer other than the lower and upper catalyst layers); a lower catalyst layer and an upper catalyst layer provided on the refractory three-dimensional structure.

The upper catalyst layer includes a precious metal, alumina, and cerium-zirconium composite oxide, and may optionally include other components.

In the catalyst of the first aspect, the ratio of the average thickness of the upper catalyst layer to the average thickness of the lower catalyst layer is preferably 0.9 to 2.0, more preferably 1.0 to 1.8, and most preferably 1.1 or more and less than 1.5. The ratio is preferably 0.9 or more so that the upper catalyst layer is more easily insulated, thereby improving the warm-up characteristic of the lower catalyst layer. On the other hand, the ratio is preferably 2.0 or less to improve adhesion between the upper catalyst layer and the lower catalyst layer, from the viewpoint of production stability.

For the same reason as described above, in the catalyst of the second aspect, the ratio of the average thickness of the upper catalyst layer relative to the average thickness of the lower catalyst layer is preferably 1.0 to 1.8, and most preferably 1.1 or more to less than 1.5.

In this specification, the thickness of the catalyst layer can be determined by measuring the catalyst with respect to the exhaust gas flow direction on the exhaust gas inlet side end face and the exhaust gas outlet side end face using a microscope, scanning electron microscope, or the like. The catalyst layers can be distinguished from each other by the difference in color of each catalyst layer under a microscope, and from the difference in the number of elements contained in each catalyst layer during EDS analysis or the like under a scanning electron microscope. At a corner in a refractory three-dimensional structure, the distance from the bottom surface to the top surface of each catalyst layer is the thickness of that layer. The thickness of the upper catalyst layer is measured at 20 points on the inlet end face, and the thickness of the lower catalyst layer is measured at 20 points on the outlet end face, and the arithmetic mean values are calculated. If the upper catalyst layer has an inlet side upper catalyst layer and an outlet side upper catalyst layer, the thickness of the inlet side upper catalyst layer is measured at 20 points on the inlet end face, and the thickness of the outlet side upper catalyst layer is measured at 20 points on the outlet end face, and the arithmetic mean value is calculated.

### (Inlet side upper catalyst layer, outlet side upper catalyst layer)

With the catalyst of the present invention, the upper catalyst layer preferably has an inlet side upper catalyst layer and an outlet side upper catalyst layer. The inlet side upper catalyst layer refers to the upper catalyst layer formed from the inlet end face of the refractory three-dimensional structure. On the other hand, the outlet side upper catalyst layer refers to the upper catalyst layer formed from the outlet end face of the refractory three-dimensional structure. These layers differ from each other in at least one of type, composition, supported amount of the components in the catalyst layer, and thickness of the catalyst layer.

When the length in the exhaust gas flow direction of the refractory three-dimensional structure is taken to be 100, the relative value of the length in the exhaust gas flow direction of the inlet side upper catalyst layer and the outlet side upper catalyst layer is preferably 12:88 to 70:30, more preferably 25:75 to 60:40, even more preferably 31:69 to 55:45, and most preferably 40:60 to 50:50. By forming the inlet side upper catalyst layer and the outlet side upper catalyst layer in this kind of length ratio, the exhaust gas purification performance can be efficiently achieved.

The upper catalyst layer may include an upper catalyst layer other than the inlet side upper catalyst layer and the outlet side upper catalyst layer, such as other upper catalyst layers formed in the region between the inlet side upper catalyst layer and the outlet side upper catalyst layer. However, in consideration of the simplicity of the manufacturing process, the upper catalyst layer preferably comprises only the inlet side upper catalyst layer and the outlet side upper catalyst layer and no other upper catalyst layers.

The inlet side upper catalyst layer and the outlet side upper catalyst layer do not necessarily need to be in contact with each other. If they are not in contact, an instance where there is an area in which an upper catalyst layer is not formed (hereinafter simply "intermediate area") between the inlet side upper catalyst layer and outlet side upper catalyst layer can be considered.

An intermediate area may or may not be formed, but an intermediate area is preferably formed. When an intermediate area is formed, the length of the intermediate area is preferably greater than 0 mm, more preferably 5 mm or more, and even more preferably 10 mm or more; preferably 30 mm or less, more preferably 20 mm or less, and even more preferably 15 mm or less. A numerical range of the length of the intermediate area is preferably 0 mm or more to 30 mm or less, more preferably 5 or more mm to 20 mm or less, and even more preferably 10 mm or more to 15 mm or less. If the length of the intermediate area is 0 mm (in other words, the inlet side upper catalyst layer and the outlet side upper catalyst layer are not separated from each other), the exhaust gas may not be efficiently purified when poisoned by phosphorus. On the other hand, the intermediate area is preferably 30 mm or less, from the viewpoint that the outlet side upper catalyst layer can be made sufficiently long to purify the exhaust gas and reduce phosphorus poisoning. Note that the length along the gas flow path direction of the gas inlet side upper catalyst layer is preferably equal to or less than the length of the lower catalyst layer. Although the reason is unclear, the intermediate area is preferably the length described above, regardless of the length of the refractory three-dimensional structure. The ratio of the length in the exhaust gas flow direction of the inlet side upper catalyst layer and the outlet side upper catalyst layer in the case of having the intermediate area is preferably the same as the ratio when there is no intermediate area. Namely, if there is an intermediate area, the relative value of the length in the exhaust gas flow direction of the inlet side upper catalyst layer and the outlet side upper catalyst layer, when the total length of the inlet side upper catalyst layer and the outlet side upper catalyst layer is taken as 100, is preferably 12:88 to 70:30, more preferably 25:75 to 60:40, more preferably 31:69 to 55:45, and most preferably 40:60 to 50:50. By forming the inlet side upper catalyst layer and the outlet side upper catalyst layer in this kind of length ratio, the exhaust gas purification performance can be efficiently achieved.

As described above, the inlet side upper catalyst layer and outlet side upper catalyst layer differ from each other in at least one of type, composition, supported amount of the components in the catalyst layer, and thickness of the catalyst layer. Among other things, the catalyst layers preferably differ from each other in at least one respect, including thickness of the catalyst layers, and more preferably only the thicknesses of the catalyst layers differ from each other (in other words, only in the respective densities (pore volumes) of the inlet side upper catalyst layer and outlet side upper catalyst layer).

When the thickness of the inlet side upper catalyst layer differs from that of the outlet side upper catalyst layer, the difference in the thicknesses is preferably 5 *µ*m to 85 *µ*m, more preferably 10 *µ*m to 50 *µ*m*,* and most preferably 15 *µ*m to 30 *µ*m*.* The inlet side upper catalyst layer may be thicker than the outlet side upper catalyst layer, and the outlet side upper catalyst layer may be thicker than the inlet side upper catalyst layer. A thickness difference of 5 *µ*m or more is preferable because the exhaust gas flow becomes turbulent and the exhaust gas more readily comes into contact with the catalyst, thereby purifying HC, CO and NOₓ contained in the exhaust gas more efficiently. When the difference in thickness is 85 *µ*m or less, there is no risk of hindering the flow of the exhaust gas, preventing a reduction in catalytic performance and this is therefore preferable.

The ratio of the thickness of the outlet side upper catalyst layer to the thickness of the inlet side upper catalyst layer is preferably 0.5 to 3.9, more preferably 1.1 to 3.9, even more preferably 1.0 to 2.5, and most preferably 1.2 to 1.5. This ratio is preferably 1.1 or more as this leads to a sufficient difference in thickness between the inlet side upper catalyst layer and the outlet side upper catalyst layer at the inlet side catalyst layer and to the thermal insulation effect outlet being effectively exhibited on the outlet side upper catalyst layer. The ratio is preferably 3.9 or less as this leads to the thickness of the outlet side upper catalyst layer not becoming too thick, thus enabling a reduction in pressure losses. Conversely, the ratio of the thickness of the outlet side upper catalyst layer to the thickness of the inlet side upper catalyst layer is preferably 0.26 to 2.00, more preferably 0.26 to 0.91, even more preferably 0.40 to 1.00 and particularly preferably 0.6 to 0.8. This ratio is preferably 0.26 or more as the thickness of the inlet-side upper catalyst layer does not become too thick and thus pressure losses can be reduced. This ratio is also preferably 0.91 or less as this leads to a sufficient difference in the thickness of the inlet side upper catalyst layer and the outlet side upper catalyst layer, and the thermal insulation effect being effectively exhibited on the inlet side upper catalyst layer.

The ratio of the thickness of the thicker end face of the upper catalyst layer to the thickness of the thinner end face of the upper catalyst layer is preferably 1.1 to 2.0, and more preferably 1.2 to 1.6. When the ratio is 2.0 or less, there is no risk of hindering the flow of the exhaust gas, preventing a reduction in catalytic performance and this is therefore preferable. Conversely, a value of 1.1 or more is preferable because the thermal insulation effect can be effectively exhibited.

With the catalyst of the present invention, the ratio of the total amount of alumina and cerium-zirconium complex oxide contained per unit of length (length in the exhaust gas flow direction) of the outlet side upper catalyst layer to the total amount of alumina and cerium-zirconium complex oxide contained per unit of length of the inlet side upper catalyst layer is preferably 0.8 to 1.2 and more preferably 0.9 to 1.1. When this ratio is in the range described above, the total amount of alumina and ceria-zirconia composite oxide contained in the inlet side upper catalyst layer and the outlet side upper catalyst layer is not significantly different between the inlet and outlet sides of the catalyst, which is preferable in that the exhaust gas is efficiently purified. If the amount of alumina and cerium-zirconium complex oxide in the slurry and the amount of slurry applied are known, the ratio can be calculated from these values. The ratio can also be determined by collecting catalyst material from the inlet and outlet sides of the catalyst and performing fluorescent X-ray analysis.

### (Precious Metal)

The precious metal functions as a catalyst for the oxidation reaction of HC or CO or the reduction reaction of NOₓ in the exhaust gas. Here, the type of the precious metal is not particularly limited, however, specific examples thereof include palladium (Pd) and rhodium (Rh). The precious metal may be used alone, or two or more types thereof may be used in combination.

With the present invention, a slurry containing a precious metal precursor is wash-coated onto a three-dimensional structure, and then each process step is carried out to achieve a catalyst on which the precious metal is supported. As a precious metal precursor, a nitrate, acetate, amine salt or ammonium salt corresponding to the precious metal (palladium (Pd), rhodium (Rh)) contained in the upper catalyst layer can be used. Among these, nitrate salts are preferred, and specifically, palladium nitrate and rhodium nitrate can be suggested.

The precious metal of the lower catalyst layer preferably includes palladium and/or rhodium, more preferably at least palladium, and even more preferably is palladium. By including palladium in the lower catalyst layer, hydrocarbons can be efficiently purified.

The precious metal in the upper catalyst layer preferably includes palladium and/or rhodium, preferably at least rhodium, and even more preferably palladium and rhodium. By including rhodium in the upper catalyst layer, NOₓ can be efficiently purified.

The content of precious metal in the lower catalyst layer (total amount of precious metal when the lower catalyst layer contains two or more precious metals) is not particularly limited, but considering exhaust gas purification performance, is preferably 0.01 to 20 g, more preferably 0.05 to 15 g, and even more preferably, 0.1 to 10 g in terms of metal per liter of the refractory three-dimensional structure.

The content of the precious metal in the upper catalyst layer (total amount of precious metal when the upper catalyst layer contains two or more precious metals; and the total amount of the precious metal contained in both upper catalyst layers when the catalyst layer has an inlet side upper catalyst layer and an outlet side upper catalyst layer) is not particularly limited, but in consideration of the exhaust gas purification performance, the content of precious metal in the refractory three-dimensional structure per liter is preferably 0.01 to 20 g, more preferably 0.05 to 10 g, and even more preferably 0.1 to 10 g, in terms of metal.

In the same layer, when the precious metal is a combination of palladium and rhodium, the ratio of the mass of Pd to the mass of Rh in the layer (Pd/Rh) is preferably 0.05 to 5.0, more preferably 0.1 to 2.0, and even more preferably 0.3 to 1.5. The Pd/Rh of 0.05 or more is preferred because the Rh is less likely to be poisoned by phosphorus because of the Pd in the gas inlet side catalyst layer. On the other hand, a Pd/Rh of 5.0 or less suppresses reactivity reduction of Rh due to Pd covering Rh and is therefore preferable.

The amount of the precious metal precursor in the slurry (or the total amount when two or more precious metal precursors are used in combination) is preferably such that the amount of each precious metal contained in each catalyst layer is in the range described above.

### (Alumina)

Alumina (Al₂O₃) can function mainly as a carrier for precious metal. Alumina includes activated alumina such as *γ-*, *δ*-, *η*-, and *θ-*alumina, lantana-containing alumina, and ceria-containing alumina. One type of alumina may be used alone, or two or more types thereof may be used in combination. Of these, *γ*, *δ*, or *θ*-alumina, lantana-containing alumina, and ceria-containing alumina are preferable from the perspective of high-temperature durability and high specific surface area.

The properties of the alumina are not particularly limited, however, from the perspective of suppressing degradation due to exhaust gas temperature, heat resistance, and the like, it is preferable for there to be little change in specific surface area at 700° C or higher and preferably 1000° C or higher.

The BET specific surface area of the alumina is not particularly limited, but is preferably 50-750 m²/g, more preferably 150-350 m²/g. With this specific surface area, a sufficient amount of the precious metal (catalyst component) can be supported on the alumina, making it possible to increase the contact area between the catalyst components and the exhaust gas and to adsorb the reactant. As a result, reactivity of the entire catalyst can be further increased.

The shape of the alumina is not particularly limited, and any shape such as granular, particulate, powdery, cylindrical, conical, prismatic, cubic, pyramidal, or amorphous, for example, may be used, however, the alumina is preferably granular, particulate, or powdery and more preferably powdery.

When the alumina is granular, particulate, or powdery, the average secondary particle size of the alumina is preferably 5 to 155 *µ*m and more preferably 21 to 89 *µ*m. Within this range, the catalyst components can be efficiently supported on the alumina surface. The size of the alumina described above indicates the size of the starting alumina. Therefore, for example, when a slurry containing alumina of a size in the range described above is wet milled, as described in the examples, the size of the alumina after wet milling will be smaller than the size before wet milling (in other words, the size of the alumina in the catalyst layer will be smaller and in some cases outside the range described above). In the present specification, the average secondary particle diameter of the starting alumina can be measured using a laser diffraction/scattering particle size distribution analyzer such as LA-920 (manufactured by HORIBA, Ltd.).

The content of alumina in the lower catalyst layer (or the total amount thereof when the lower catalyst layer contains two or more types of alumina) is not particularly limited, but is preferably 10 to 300 g, and more preferably 10 to 110 g, per liter of the refractory three-dimensional structure. When the content of alumina of the lower catalyst layer is 10 g or greater, precious metal can be sufficiently dispersed in the alumina, and a catalyst that is more durable can be obtained. On the other hand, when the content of alumina is 300 g or less, the contact between the precious metal and the exhaust gas is favorable, and exhaust gas purification performance can be more sufficiently exhibited.

The content of alumina in the upper catalyst layer (or the total amount thereof when the upper catalyst layer contains two or more types of alumina) is not particularly limited, but is preferably 10 to 200 g, and more preferably 10 to 110 g, per liter of the refractory three-dimensional structure. When the content of alumina of the upper catalyst layer is 10 g or more, precious metal can be sufficiently dispersed in the alumina, and a catalyst that is more durable can be obtained. On the other hand, when the content of alumina is 200 g or less, the contact between the precious metal and the exhaust gas is good, and exhaust gas purification performance can be more sufficiently exhibited.

### (Cerium-zirconium complex oxide)

The cerium-zirconium composite oxide (CeO₂-ZrO₂) can act mainly as an oxygen storage and release material. The oxygen storage and release material has a function of storing oxygen in an oxidizing atmosphere (lean) and releasing oxygen in a reductive atmosphere (rich) according to variation in air-fuel ratio (A/F), which changes according to the operating conditions so that oxidation and reduction reactions progress efficiently.

The cerium-zirconium composite oxide may contain at least one metal selected from the group consisting of lanthanum (La), yttrium (Y), neodymium (Nd), and praseodymium (Pr). Specific examples include ceria/zirconia/lanthana composite oxides and ceria/zirconia/lanthana/yttria composite oxides.

The BET specific surface area of the cerium-zirconium composite oxide is not particularly limited, but is preferably 20 to 250 m²/g and more preferably 30 to 100 m²/g.

The shape of the cerium-zirconium composite oxide is not particularly limited, and any shape such as granular, particulate, powdery, cylindrical, conical, prismatic, cubic, pyramidal, or amorphous, for example, may be used, however, granular, particulate, or powdery are preferable.

Examples of the crystal structure of the cerium-zirconium composite oxide include cubic, tetragonal, monoclinic and orthorhombic crystals, but it is preferably cubic, tetragonal or monoclinic, and more preferably cubic or tetragonal.

When the cerium-zirconium complex oxide is in granular, particulate or powder form, the average secondary particle diameter of the cerium-zirconium complex oxide is preferably 0.5 to 40 *µ*m, and more preferably 1.0 to 20 *µ*m. In this range, wet milling is easy and wash-coating the three-dimensional structure can be performed efficiently. The size of the cerium-zirconium composite oxide described above indicates the size of the starting cerium-zirconium composite oxide. Therefore, when a slurry containing cerium-zirconium complex oxide with a size in the range described above is wet milled, the size of the cerium-zirconium complex oxide after wet milling may be smaller than the size before wet milling (in other words, the size of the cerium-zirconium complex oxide in the catalyst layer may be smaller and in some cases outside the range described above). With the present specification, the average secondary particle diameter of starting cerium-zirconium composite oxide can be measured using a laser diffraction/scattering particle size distribution analyzer such as LA-920 (manufactured by HORIBA, Ltd.).

The content of cerium (Ce) in the cerium-zirconium composite oxide is preferably 3.0 to 65 mass%, more preferably 5.0 to 50 mass%, and even more preferably 10 to 47 mass% in terms of oxide (CeO₂). In addition, the content of zirconium (Zr) included in the cerium-zirconium composite oxide is preferably 35 to 97 mass%, more preferably 50 to 95 mass%, and even more preferably 53 to 90 mass% in terms of oxide (ZrO₂). The includsion of cerium (Ce) and zirconium (Zr) at this content ratio enables oxygen absorption and desorption to proceed even for exhaust gases at low temperatures of 500° C or less.

The content (oxide equivalent) of the cerium-zirconium complex oxide in the lower catalyst layer is not particularly limited, but is preferably 5 to 200 g, more preferably 5 to 100 g, and even more preferably 10 to 90 g per liter of the refractory three-dimensional structure.

The lower catalyst layer includes alumina and a cerium-zirconium composite oxide, and the ratio of the mass of the cerium-zirconium composite oxide to the mass of the alumina is preferably 0.1 to 10, more preferably 0.3 to 5.3, and most preferably 0.5 to 4.3. With such a ratio, a sufficient amount of the precious metal (catalyst component) can be supported on the alumina, which makes it possible to increase the contact area between the catalyst components and the exhaust gas and allows the cerium-zirconium composite oxide to sufficiently adsorb hydrocarbons (HC), carbon monoxide, and nitrogen oxides (NOₓ) in the exhaust gas. As a result, the reactivity of the entire catalyst can be further increased, and the exhaust gas purification performance can be further increased.

The content (oxide equivalent) of the cerium-zirconium complex oxide in the upper catalyst layer is not particularly limited, but is preferably 5 to 200 g, more preferably 5 to 100 g, and even more preferably 10 to 90 g per liter of the refractory three-dimensional structure.

The upper catalyst layer includes alumina and a cerium-zirconium composite oxide, and the ratio of the mass of the cerium-zirconium composite oxide to the mass of the alumina is preferably 0.1 to 10, more preferably 0.3 to 5.3, and most preferably 0.5 to 4.3. With this ratio, a sufficient amount of precious metal (catalytic components) can be supported on the alumina, increasing the contact area between the catalyst components and the exhaust gas, and the cerium-zirconium composite oxide works efficiently as an oxygen storage and release material. As a result, the reactivity of the entire catalyst can be further increased, and the exhaust gas purification performance can be further increased.

### (Other components)

In addition to precious metal, alumina, and cerium-zirconium composite oxide, the catalyst of the present invention may further include other additional components as long as they do not reduce the effectiveness of the catalyst of the present invention. Here, these other additional components are not particularly limited, and components that can ordinarily be used in this field can be similarly used. Specific examples include alkali metals, alkali earth metals, rare earth metals, or oxides or sulfides thereof.

Examples of alkali metals include lithium, sodium, potassium, rubidium, and cesium, and potassium is preferable. Examples of alkali earth metals include calcium, strontium, and barium, and barium is preferable. Here, the alkali metal or alkali earth metal may be incorporated alone, or two or more types thereof may be incorporated together, or at least one type of alkali metal and at least one type of alkali earth metal may be combined and incorporated.

The content of the alkali earth metal in the lower catalyst layer or upper catalyst layer is also not particularly limited, but is preferably 0 to 50 g, more preferably 0.5 to 30 g, and even more preferably 1 to 20 g per 1 L of the refractory three-dimensional structure in terms of oxide. The inclusion of this amount of alkali earth metal in the lower catalyst layer or upper catalyst layer further improves the warm-up characteristics of the catalyst.

The rare earth metal is not particularly limited, however, examples thereof include lanthanum (La), neodymium (Nd), yttrium (Y), scandium (Sc), and praseodymium (Pr). Of these, lanthanum, neodymium, yttrium, and praseodymium are preferable, and lanthanum and praseodymium are more preferable. The rare earth metal may be contained alone, or two or more types thereof may be contained in combination. In addition, the rare earth metal may be in the form of a metal,or may be in the form of a sulfide.

The content of the rare earth metal in the lower catalyst layer or upper catalyst layer is also not particularly limited, but is preferably 0 to 50 g, more preferably 0.2 to 30 g, and even more preferably 0.3 to 10 g per 1 L of the refractory three-dimensional structure in terms of oxide. The inclusion of this amount of rare earth metal in the lower catalyst layer or upper catalyst improves the adhesion to the adjacent catalyst layer containing the pore connecting agent.

The starting materials for the other components optionally included may employ ordinary materials used in the field as appropriate. The amount of the starting materials of the other components in each slurry for forming a catalyst layer (or the total amount of the starting materials when two or more starting materials are used in combination) should be such that the amount of the other components included in each catalyst layer is in the range described above.

### [Method of forming the lower catalyst layer]

The method of forming the lower catalyst layer is not particularly limited and can be formed by referring to known methods as appropriate. By way of example, the lower catalyst layer can be formed by applying a slurry for forming the lower catalyst layer including as starting materials a precious metal precursor and alumina and cerium-zirconium composite oxide, and other optional components on a refractory three-dimensional structure, and then drying and/or calcining.

### (Process of preparing the slurry for forming the lower catalyst layer)

The slurry for forming the lower catalyst layer is prepared by mixing as starting materials the precious metal precursor and alumina and cerium-zirconium composite oxide, and other optional components in an aqueous medium and wet milling.

With the present invention, the slurry for forming the lower catalyst layer should not substantially contain, or preferably does not contain, the pore connecting agent described below. Herein, with the present specification, 'essentially no pore connecting agent included in the slurry for the lower catalyst layer' means that when the slurry for the lower catalyst layer is heated to 1000° C, the ratio of pore connecting agent is 1 mass% or less relative to the total solid content. The slurry for the lower catalyst layer containing essentially no pore connecting agent or containing no pore connecting agent leads to large pores occurring less readily in the lower catalyst layer and so, as described above, improves the warm-up characteristics.

As an aqueous medium, for example, water (purified water, ultrapure water, deionized water, distilled water, or the like), a lower alcohol such as ethanol or 2-propanol, an organic alkaline aqueous solution, or the like can be used. Among these, water or a lower alcohol is preferably used, and water is more preferably used. The amount of the aqueous medium is not particularly limited, however, the amount is preferably such that the ratio of the solid content in the slurry (solid content mass concentration) is 5 to 60 mass% and more preferably 10 to 50 mass%.

The order of addition of the precious metal precursor, alumina and cerium-zirconium complex oxides, and other optional components as starting materials is not restricted and adding them to the aqueous medium may be performed in bulk or separately in an appropriate order. For example, the starting material alumina and cerium-zirconium composite oxide and other optional components may be added to the aqueous medium, stirred for 5 minutes to 24 hours, and then the precious metal precursors may be added and stirred for 5 minutes to 24 hours. In addition, the alumina and cerium-zirconium complex oxide can be added to the aqueous medium and stirred for 5 minutes to 24 hours, then the precious metal precursor can be added and stirred for 5 minutes to 24 hours, and then the starting materials for the other components can be added.

The pH of the slurry for forming the lower catalyst layer is not particularly limited, however, the pH is preferably adjusted to 5 or more, preferably 6 or more and less than 8. The pH of the slurry is preferably set in such a range so that the catalyst layer can be stably wash-coated. Therefore, if the pH of the mixture after adding and mixing all the starting materials is 8 or more, the pH is preferably adjusted to less than 8 using an acid such as hydrochloric acid, sulfuric acid, nitric acid, or carbonic acid. In addition, if the pH of the mixture after adding all the starting materials is less than 5, the pH should be adjusted to 5 or more, preferably 6 or more, using a base such as ammonia, sodium hydroxide, potassium hydroxide, sodium carbonate or potassium carbonate.

After all the starting materials are added and mixed, the mixture is wet milled. Here, wet milling can be performed by a known method using a ball mill, for example. The wet milling conditions are not in particular limited, but for example, wet milling at a rotational speed of 50 to 5,000 RPM for 5 minutes to 5 hours is preferable. Wet milling under these conditions results in an average particle diameter for the starting material components of about 5 *µ*m (or less).

### (Application process)

Next, the slurry for forming the lower catalyst layer is applied to the refractory three-dimensional structure. A known method such as wash coating can be employed as appropriate as the application method. The applied amount of the slurry for forming the lower catalyst layer can be appropriately set by a person skilled in the art based on the solid content in the slurry, the thickness of the catalyst layer to be formed, and the like, and preferably the amount of precious metal, alumina and cerium-zirconium complex oxide and other components optionally included in the lower catalyst layer are within the ranges described above.

### (Drying process)

Next, the coating layer made from the slurry for forming the lower catalyst layer which was formed on the refractory three-dimensional structure is dried. The drying is performed in air; preferably at a temperature of 50 to 170° C, more preferably 70 to 150° C; preferably for 5 minutes to 10 hours, more preferably for 15 minutes to 3 hours.

### (Calcination process)

Next, the dried coating layer is calcined. This enables each component (precious metal, alumina and cerium-zirconium composite oxide, and other optional components) to adhere to the refractory three-dimensional structure. In addition, nitrogen-containing components, hydrogen-containing components, and carbon-containing components remaining in the catalyst layer are removed by calcination.

The calcination is carried out in air; preferably at a temperature of 440° C to 800° C, more preferably at 450° C to 610° C, even more preferably at 450° C to 555° C; preferably for 10 minutes to 3 hours, more preferably for 15 minutes to 1 hour. Under these conditions, the catalyst components (precious metal, alumina, cerium-zirconium complex oxide, and other optional components) can be efficiently deposited onto the refractory three-dimensional structure.

### [Method of forming the upper catalyst layer]

Regarding the catalyst according to the first aspect, at least a portion of the upper catalyst layer is formed using a manufacturing method including:
applying a slurry for forming the upper catalyst layer onto the lower catalyst layer, the slurry containing a pore connecting agent with a combustion decomposition temperature of 150° C or more to 400° C or less, a precious metal precursor, and alumina and cerium-zirconium composite oxide, the content ratio of the pore connecting agent being less than 20 mass% of the total solid content when heated to 1000° C; and
holding this workpiece in an oxygen-containing gas at a temperature of -150° C to +50° C relative to the combustion decomposition temperature. The method of manufacturing will be described in detail below. The method of forming the upper catalyst layer in the catalyst according to the second aspect is not particularly limited and can be formed by referring to known methods as appropriate, but is preferably produced by the same manufacturing method as the catalyst according to the first aspect described above.

Whether or not at least a portion of the upper catalyst layer is formed by the manufacturing method can be determined by measuring the carbon content by known methods such as elemental analysis. In more detail, the use of pore connecting agents can be investigated by performing elemental analysis of the catalyst to determine the carbon content. Elemental analysis of the amount of carbon (C) in the upper catalyst layer coated with a slurry using a pore connecting agent and the lower catalyst layer coated with a slurry not containing a pore connecting agent can be performed, and the amount of C in the upper catalyst layer should be higher than the amount of C in the lower catalyst layer.

The use of pore connecting agents can also be confirmed by determining the amount of C in each catalyst layer using SEM-EDS. EDS analysis of the amount of carbon (C) in the upper catalyst layer coated with a slurry using a pore connecting agent and the lower catalyst layer coated with a slurry not containing a pore connecting agent can be performed, and the amount of C in the upper catalyst layer is preferably greater than the amount of C in the lower catalyst layer.

### (Process of preparing the slurry for forming the upper catalyst layer)

The slurry for forming the upper catalyst layer is prepared by mixing as starting materials a pore connecting agent having a combustion decomposition temperature of 150° C to 400° C, a precious metal precursor, alumina and a cerium-zirconium composite oxide, and other optional components in an aqueous medium, and then wet milling.

The pore connecting agent has a combustion decomposition temperature of 150° C to 400° C. If the combustion decomposition temperature of the pore connecting agent is less than 150° C, the evaporation of water that could not be removed in the drying process described below and the combustion of the pore connecting agent occur simultaneously. As a result, favorable pores are not formed, and the desired exhaust gas purification performance may not be achieved. In addition, when the combustion decomposition temperature of the pore connecting agent exceeds 400° C, the combustion decomposition temperature of the pore connecting agent gets close to the calcination temperature so decomposition of precious metal sources (nitrates, in particular) proceeds in parallel with the combustion of organic components. As a result, desirable pores are not formed, and the desired exhaust gas purification performance may not be achieved. In consideration of the effect of improving exhaust gas purification performance and operability, the combustion decomposition temperature of the pore connecting agent is 150° C to 400° C, preferably 180° C to 390° C, and more preferably 200° C to 380° C. If the combustion decomposition temperature is in the range described above, it is close to the combustion decomposition temperature of other organic components in the slurry for forming the upper catalyst layer, and the carbon dioxide and water vapor generated during the decomposition cause the connection of the pores to proceed more efficiently. The pore connecting agent having such a combustion decomposition temperature is not limited to the following, however, examples include polymethylmethacrylate (combustion decomposition temperature: 373° C), polyethylene glycol hexadecyl ether (polyoxyethylene (20) cetyl ether) (combustion decomposition temperature: 255° C), polyethylene glycol dodecyl ether (polyoxyethylene (23) lauryl ether), rice starch (combustion decomposition temperature: 320° C), and melamine cyanurate. Of these, polyethylene glycol hexadecyl ether, polyethylene glycol dodecyl ether, polymethylmethacrylate, and rice starch are preferable, and polyethylene glycol hexadecyl ether and/or polymethylmethacrylate are more preferable, and polymethylmethacrylate is even more preferable. Note that a pore connecting agent may be used alone, or two or more types thereof may be used in combination. Here, the combustion decomposition temperature can be measured by a known method but is preferably measured using TG-DTA (Thermogravimetry-Differential Thermal Analysis). In the present specification, the combustion decomposition temperature is measured by the following method described below. Note that a commercially available product may be used as the pore connecting agent.

When a solid pore connecting agent is used at 150° C, the average particle diameter of the pore connecting agent is preferably 0.4 *µ*m to 15 *µ*m, more preferably 1 *µ*m to less than 12 *µ*m, even more preferably 2 *µ*m to 10 *µ*m*,* and particularly preferably 3 *µ*m to 10 *µ*m. Note that the average particle size of the pore connecting agent is determined by randomly selecting arbitrary particles from a scanning electron microscope image, measuring the diameters of 100 particles, and calculating the number average thereof.

The amount of the pore connecting agent contained in the slurry for forming the upper catalyst layer is less than 20 mass%, preferably 3 to 18 mass%, and more preferably 5 to 10 mass%, relative to the total solid content of the slurry for forming the upper catalyst layer when the slurry is heated to 1000° C. With this amount, favorable pores are formed by the pore connecting agent, and the exhaust gas purification performance can be improved. When the slurry for forming the upper catalyst layer is heated to 1000° C, the total solid content includes the precious metal (metallic state), alumina, cerium-zirconium composite oxide, and other components added as necessary. The state of the other components at 1000° C varies with each component, but they are usually present in an oxide or sulfide state. The heating is performed in an air atmosphere.

The amount of the precious metal precursor in the slurry for forming the upper catalyst layer (or the total amount when two or more precious metal precursors are used in combination) is preferably such that the amount of each precious metal contained in the upper catalyst layer is in the range described above.

The starting materials for the other components optionally included may be ordinary materials used in the field as appropriate. The amount of the starting materials of the other components in each slurry for forming the upper catalyst layer (or the total amount of the starting materials when two or more starting materials are used in combination) should be such that the amount of the other components included in the upper catalyst layer is in the range described above.

As an aqueous medium, for example, water (purified water, ultrapure water, deionized water, distilled water, or the like), a lower alcohol such as ethanol or 2-propanol, an organic alkaline aqueous solution, or the like can be used. Among these, water or a lower alcohol is preferably used, and water is more preferably used. The amount of the aqueous medium is not particularly limited, however, the amount is preferably such that the ratio of solid content in the slurry (solid content mass concentration) is 5 to 60 mass% and more preferably 10 to 50 mass%.

The order of addition of the starting materials, being the pore connecting agent, precious metal precursor, alumina and cerium-zirconium complex oxides, and other optional components, is not restricted and adding them to the aqueous medium may be performed in bulk or separately in an appropriate order. For example, as starting materials, the pore connecting agent, alumina and cerium-zirconium composite oxide and other optional components may be added to the aqueous medium, stirred for 5 minutes to 24 hours, and then the precious metal precursors may be added and stirred for 5 minutes to 24 hours. Alternatively, after alumina and ceria/zirconia composite oxide are added to the aqueous medium and stirred for 5 minutes to 24 hours, the pore connecting agent may be added and stirred for 5 minutes to 24 hours, and afterwards the precious metal source is added and stirred for 5 minutes to 24 hours, starting materials for other components may be added.

The pH of the slurry for forming the upper catalyst layer is not particularly limited, however, the pH is preferably adjusted to 6 or more, preferably 7 or more and less than 8. Therefore, if the pH of the mixture after adding and mixing all the starting materials is 8 or more, the pH is preferably adjusted to less than 8 using an acid such as hydrochloric acid, sulfuric acid, nitric acid, or carbonic acid. In addition, if the pH of the mixture after adding all the starting materials is less than 6, the pH should be adjusted to 6 or more, preferably 7 or more, using a base such as ammonia, sodium hydroxide, potassium hydroxide, sodium carbonate or potassium carbonate.

After all the starting materials are added and mixed, the mixture is wet milled. Here, wet milling can be performed by a known method using for example, a ball mill. The wet milling conditions are not in particular limited, but for example, wet milling at a rotational speed of 50 to 5,000 RPM for 5 minutes to 5 hours is preferable. Wet milling under these conditions results in an average particle diameter of about 5 *µ*m (or less) for the starting material components.

### (Application process)

Next, the slurry for forming the upper catalyst layer is applied on top of the lower catalyst layer. A known method such as wash coating can be employed as appropriate as the application method. The application amount of the slurry for forming the upper catalyst layer can be appropriately set by a person skilled in the art based on the solid content in the slurry, the thickness of the catalyst layer to be formed, and the like, and preferably the amount of precious metal, alumina and cerium-zirconium complex oxide and other components optionally included in the upper catalyst layer are within the ranges described above.

### (Drying process)

Next, if necessary, the coating layer composed of the slurry for forming the upper catalyst layer formed over the lower catalyst layer may be dried. The drying is performed in air; preferably at a temperature of 50 to 170° C, more preferably 70 to 150° C; preferably for 5 minutes to 10 hours, more preferably for 15 minutes to 3 hours.

### (Pore connecting process)

Next, the coating layer composed of the slurry for forming the upper catalyst layer is held in an oxygen-containing gas at a temperature above -150° C and +50° C or less relative to the combustion decomposition temperature. In this specification, this process is also referred to simply as the "pore connecting process". This process causes combustion and decomposition of the pore connecting agent, removal of the pore connecting agent from the dried slurry coating layer (catalyst precursor layer) as a gas mass, and formation of preferable pores. On the other hand, when the drying and/or calcination processes are carried out without having performed the pore connecting process, the desired exhaust gas purification performance is not achieved because preferable pores are not formed.

The heat treatment temperature in the pore connecting process is above -150° C and +50° C or less relative to the combustion decomposition temperature. Note that the pore connecting agent starts to combust and decompose at around -50° C of the combustion decomposition temperature. However, when the heat treatment temperature is not higher than -150° C relative to the combustion decomposition temperature, the pore connecting agent does not combust sufficiently, and therefore, a sufficient amount of gas cannot be generated, and the pore connecting agent combusts simultaneously in the subsequent calcination process. For this reason, favorable pores cannot be formed. If the heat treatment temperature exceeds +50° C relative to the combustion decomposition temperature, all the pore connecting agent combusts simultaneously, resulting in the formation of excessively large pores. As a result, the diffusibility of the exhaust gas is too high, and the amount of exhaust gas that passes through without coming into contact with the catalyst components increases, resulting in a decrease in the exhaust gas purification rate. The heat treatment temperature is preferably higher than -100° C and less than -85° C, relative to the combustion decomposition temperature. The heat treatment temperature described above is particularly applicable to pore connecting agents with a combustion decomposition temperature of 300° C or higher, such as polymethylmethacrylate.

The absolute temperature for heat treatment is preferably 200° C or more to 450° C or less, more preferably 220° C or more to 400° C or less, and even more preferably 250° C or more to 350° C or less. In the temperature range described above, the pore connecting agent combusts at a moderate rate and forms favorable pores, thereby improving the exhaust gas purification performance.

The duration of the heat treatment (heat treatment time) is preferably 5 minutes to 3 hours, preferably 10 minutes to 1 hour. Combusting the pore connecting agent over such a heat treatment period can form favorable pores and improve the exhaust gas purification performance.

The heat treatment in the pore connecting process is carried out in an oxygen-containing gas and is preferably carried out while the oxygen-containing gas is flowing. The oxygen-containing gas is not particularly limited, and air, oxygen gas, and oxygen containing nitrogen gas can be used. This operation allows organic components (in particular, the pore connecting agent) to be removed more efficiently. Here, the flow rate (gas flow rate) of oxygen-containing gas is not particularly limited but is preferably not less than 0.1 m/sec and more preferably 0.2 to 1.2 m/sec.

### (Calcination process)

Next, after undergoing the pore connecting process, the coating layer is calcined. This causes each component (precious metal, alumina, cerium-zirconium composite oxide, and other optional components) to adhere to the top of the lower catalyst layer. In addition, nitrogen-containing components, hydrogen-containing components, and carbon-containing components remaining in the catalyst layer are removed by calcination.

The calcination is carried out in air; preferably at a temperature of 460° C to 800° C, more preferably 480° C to 610° C, even more preferably 500° C to 555° C; preferably for 10 minutes to 3 hours, and more preferably for 15 minutes to 1 hour. Under these conditions, the catalyst components (precious metal, alumina, cerium-zirconium complex oxide, and other optional components) can be efficiently adhered onto the lower catalyst layer.

The exhaust gas purification catalyst according to the present invention can be manufactured by combining the method of forming the lower catalyst layer described above and the method of forming the upper catalyst layer described above. In other words, a method for manufacturing an exhaust gas purification catalyst according to a third aspect of the present invention includes:
a step of forming a lower catalyst layer by applying a slurry for the lower catalyst layer including a precious metal precursor and alumina and cerium-zirconium composite oxide onto a refractory three-dimensional structure and performing heat treatment (drying and/or calcination), and
a step of applying onto the lower catalyst layer a slurry for an upper catalyst layer, the slurry containing a pore connecting agent with a combustion decomposition temperature of 150° C or more to 400° C or less, a precious metal precursor, and alumina and cerium-zirconium composite oxide, the content ratio of the pore connecting agent being less than 20 mass% of the total solid content when heated to 1000° C, and
holding the workpiece in an oxygen-containing gas at a temperature above -150° C and +50° C or lower, relative to the combustion decomposition temperature, and then calcining.

All of the upper catalyst layer may be formed using the method described above, or, as long as at least a portion of the upper catalyst layer is formed using the method described above, other parts of the upper catalyst layer may be formed using other formation methods. The method of forming other portions of the upper catalyst layer is not particularly limited, and known techniques can be referred to as appropriate. Examples include a slurry containing starting materials of precious metal precursors, alumina and cerium-zirconium composite oxide, and other optional components being applied to a portion of the top of the lower catalyst layer and then dried and/or calcined to form the other portion of the upper catalyst layer. Since the method is the same as the method for forming the lower catalyst layer, it is not described herein.

The exhaust gas purification catalyst according to the present invention described above can exhibit high purification performance for exhaust gas (hydrocarbons (HC), carbon monoxide (CO), and nitrogen oxides (NOₓ)) emitted from internal combustion engines, particularly gasoline engines. Accordingly, the exhaust gas purification catalyst of the present invention is suitably used as a catalyst for purifying exhaust gas emitted from a gasoline engine.

### Exhaust Gas Purification Method

A fourth aspect of the present invention relates to a method of exhaust gas purification using an exhaust gas purification catalyst described above or an exhaust gas purification catalyst manufactured using the method of manufacture described above to purify exhaust gas including phosphorus compounds. The exhaust gas purification catalyst of the present invention can purify exhaust gas even when exposed to phosphorus compounds in the exhaust gas over a long period of time.

Phosphorus compounds are deposited on the catalyst exposed to exhaust gas containing phosphorus compounds. The amount of phosphorus compound deposited, as phosphorus oxide (P₂O₅), can be effectively 1 g to 50 g, more effectively 1 g to 30 g, more effectively 1 g to 15 g, and particularly effectively 1 g to 10 g per liter of the refractory three-dimensional structure. Even if this amount of phosphorus compound is deposited, the catalyst of the present invention can exhibit high exhaust gas purification performance. The amount of the phosphorus compound deposited on the catalyst can be analyzed using, for example, a fluorescence X-ray analysis (XRF), an electron probe microanalyzer (EPMA), and SEM-EDX.

The exhaust gas is preferably an exhaust gas emitted from an internal combustion engine, and more preferably an exhaust gas emitted from a gasoline engine. The term "gasoline engine" is intended to exclude diesel engines, and includes, in addition to ordinary gasoline engines, for example, gasoline hybrid engines, engines using natural gas, ethanol, dimethyl ether, and the like as fuel. Exhaust gas ordinarily contains HC, CO, and NOₓ. For example, exhaust gas contains nitrogen oxides (for example, NO, NO₂, and N₂O), carbon monoxide (CO), carbon dioxide (CO₂), oxygen (O₂), hydrogen (H₂), ammonia (NH₃), water (H₂O), sulfur dioxide (SO₂), hydrocarbons (HC), and the like at given ratios.

Examples of the method of bringing the exhaust gas into contact with the catalyst include a method in which, with the exhaust gas purifying catalyst being installed in the exhaust flow path of an exhaust port of the internal combustion engine, the exhaust gas is caused to flow into the exhaust flow path.

The temperature of the exhaust gas is preferably 0° C to 800° C; namely, within a temperature range of the exhaust gas during normal operation of a gasoline engine. Here, the air-fuel ratio (A/F) in the exhaust gas of a gasoline engine having a temperature of 0° C to 800° C is 10 to 30 and preferably 11 to 14.7. Alternatively, as another preferable embodiment, the temperature of the exhaust gas may be within a high temperature range of 800 to 1200° C. Here, the air-fuel ratio in the exhaust gas of an internal combustion engine having a temperature of 800 to 1200° C is preferably 10 to 18.6.

Further, the catalyst of the present invention can exhibit a superior exhaust gas treatment effect for low-temperature exhaust gas of 50 to 600° C (in particular, including HC, CO, NOₓ, water vapor, or the like) or low-temperature exhaust gas of 50 to 600° C after having been exposed for a long period of time to high-temperature exhaust gas having a catalyst bed temperature of 650 to 1000° C, preferably 650 to 900° C (in particular, including HC, CO, NOₓ, water vapor, or the like).

Thus, the catalyst of the present invention described above or a catalyst produced by the method described above may be exposed to exhaust gas having a temperature of 650 to 900° C and preferably 700 to 850° C. Further, the amount of time that the catalyst of the present invention is exposed to high-temperature exhaust gas (amount of time that the exhaust gas is allowed to flow) is also not particularly limited but is, for example, 10 to 800 hours, preferably 16 to 500 hours, and more preferably 40 to 100 hours. Even after being exposed to such a high-temperature exhaust gas, the catalyst of the present invention has high performance. In order to investigate the exhaust gas purification performance of the catalyst after being exposed to high-temperature exhaust gas in this way, an effective method is subjecting the catalyst to a treatment involving exposure to exhaust gas at 650 to 1000° C, preferably 650 to 900° C, for 10 to 300 hours as thermal aging, and then evaluating the exhaust gas purification performance (resistance to catalyst deterioration).

Note that in the present specification, the "temperature of the exhaust gas" refers to the temperature of the exhaust gas at the catalyst inlet. Here, the "catalyst inlet" refers to a portion extending 10 cm from the catalyst end face on the exhaust gas inlet side toward the internal combustion engine side in the exhaust pipe in which the exhaust gas purification catalyst is installed, and also refers to the location of the center portion in the longitudinal direction (axial direction) of the exhaust pipe. In addition, in the present specification, the "catalyst bed" refers to a center portion between the catalyst end face on the exhaust gas inlet side and the catalyst end face on the exhaust gas outlet side in the exhaust pipe, and also refers to the location of the center portion of a cross section of the exhaust pipe (when the cross section of the exhaust pipe is not circular, this is the location of the center of gravity of the cross section of the exhaust pipe).

### EXAMPLES

The effects of the present invention will be described using the following examples and comparative examples. However, the technical scope of the present invention is not limited to the following examples. Note that in the following examples, unless indicated otherwise, operations were performed at room temperature (25° C).

### Example 1

Palladium nitrate aqueous solution, alumina (Al₂O₃, BET specific surface area: 148 m²/g, average secondary particle size: 63 *µ*m), cerium-zirconium composite oxide (CeO₂-ZrO₂, BET specific surface area: 78 m²/g, average secondary particle size: 5.9 *µ* (CeO₂ content ratio: 30 mass%)), lanthanum acetate, and barium sulfate (BaSO₄) were weighed so that the mass ratio was 3.5:38:28:0.4:9 in terms of palladium (Pd): Al₂O₃: CeO₂-ZrO₂: Ianthanum oxide (La₂O₃) : BaSO₄, respectively. Slurry a1 was prepared by adding each of the weighed starting materials to deionized water and wet milling in a ball mill until the average secondary particle diameter of the solids in the slurry was 5.0 *µ*m. Slurry a1 is applied to a cordierite support of 103 mm in diameter, 105 mm in length, cylindrical shape of 0.875 L, 600 cells per square inch (1 inch = 25.4 mm), and a cell wall thickness of 2.5 mils (1 mil = 0.0254 mm), as refractory three-dimensional structure, achieving a supported amount after calcination of 78.9 g/L. After drying at 150° C for 15 minutes and calcination at 550° C for 30 minutes, A1 provided with a lower catalyst layer on a refractory three-dimensional structure was obtained.

Palladium nitrate aqueous solution, rhodium nitrate aqueous solution, alumina (Al₂O₃, BET specific surface area: 148 m²/g, average secondary particle size: 63 *µ*m), cerium-zirconium composite oxide (CeO₂-ZrO₂, BET specific surface area: 78 m²/g, average secondary particle size: 5.9 *µ* (CeO₂ content ratio: 30 mass%)), and lanthanum acetate were weighed so that the mass ratio was 0.05:0.1:19:14:0.4 in terms of palladium (Pd): Rhodium (Rh) : Al₂O₃: CeO₂-ZrO₂: Ianthanum oxide (La₂O3), respectively and wet milled in a ball mill until the average particle diameter of the solid content in the slurry reached 5.0 *µ*m to prepare slurry a2. The slurry a2 was applied from the inlet end face of A1 to a position 47.5 mm from the inlet end face of A1, so that the supported amount after calcination was 33.55 g/L, and after drying at 150° C for 15 minutes, the slurry was calcined at 550° C for 30 minutes to obtain A2 with a lower catalyst layer and an inlet side upper catalyst layer provided on a refractory three-dimensional structure.

Polymethylmethacrylate (PMMA, average particle diameter: 10 *µ*m) was added to slurry a2 to achieve a ratio of 10 mass% (3.355 mass parts) of the total solid content (33.55 mass parts) when slurry a2 was heated to 1000° C, and the slurry was stirred with a Three-One Motor for 10 minutes. Next, slurry a3 was prepared by wet milling the above in a ball mill so that the average secondary particle diameter of the solids including PMMA in the slurry was 4.5 *µ*m*.* Slurry a3 was applied from the outlet end face of A2 to a position 47.5 mm from the outlet end face of A2, so that the supported amount after calcination was 33.55 g/L and after drying at 150° C for 15 min, the workpiece was held at 280° C in air for 10 min to form pores. Next, the refractory three-dimensional structure was calcined at 550° C for 30 minutes to obtain catalyst A provided with a lower catalyst layer, an inlet side upper catalyst layer, an intermediate area of 10 mm in length and an outlet side upper catalyst layer (with pores).

In addition, the combustion decomposition temperature of polymethylmethacrylate (pore connecting agent) was measured to be 373° C using the following method with a thermogravimetry-differential thermal analyzer (TG-DTA). The heat treatment temperature for the pore connecting process was -93° C (= 280-373) relative to the combustion decomposition temperature. Note that polymethylmethacrylate (pore connecting agent) began to combust at around 321° C.

### - Method for measuring the combustion decomposition temperature of the pore connecting agent -

First, 30 mg of the pore connecting agent (sample) is placed on the sample pan of a TG-DTA (manufactured by Bruker AXS, trade name: TG-DTA2020SR) through which a carrier gas (air) is circulated, and after baseline stabilization, the differential heat is measured when the sample undergoes combustion decomposition under conditions where the sample is heated from 25° C to 800° C at a rate of 10° C/min under an air flow of 100 mL/min. Here, combustion decomposition refers to a state in which differential heat of 100 *µ*V or greater per 30 mg of sample is generated in the DTA profile of the TG-DTA measurement data, and no more differential heat is generated thereafter. The temperature at which the state described above (state of maximum differential heat) is indicated is referred to as the "combustion decomposition temperature (° C) of the pore connecting agent" .

### Example 2

Slurry a2 was applied from the outlet end face of A1 to a position 47.5 mm from the outlet end face of A1, obtained in example 1, so that the supported amount after calcination was 33.55 g/L and after drying at 150° C for 15 minutes and calcination at 550° C for 30 minutes, the refractory three-dimensional structure was provided with a lower catalyst layer and an outlet side upper catalyst layer, and thus B1 was obtained. Slurry a3 was applied from the inlet end face of B1 to a position 47.5 mm from the inlet end face of B1, to achieve a supported amount after calcination of 33.55 g/L and after drying at 150° C for 15 min, the workpiece was held at 280° C for 10 min in air to form pores. Next, calcination was performed at 550° C for 30 min to obtain catalyst B provided with a lower catalyst layer, an upper catalyst layer on the inlet side (with pores), an intermediate area of 10 mm in length, and an outlet side upper catalyst layer.

### Example 3

Slurry a3 was applied to A1 obtained in example 1 from the inlet end face to the outlet end face (105 mm in total length) to achieve a supported amount after calcination of 67.1 g/L and after drying at 150° C for 15 minutes, the workpiece was held at 280° C in air for 10 minutes to form pores. Next, through calcination at 550° C for 30 minutes, catalyst C provided with a lower catalyst layer and upper catalyst layer (with pores) on the refractory three-dimensional structure was obtained.

### Comparative Example 1

To the refractory three-dimensional structure, a cordierite support having a diameter of 103 mm, a length of 105 mm, a cylindrical shape of 0.875 L, 600 cells per inch, and a cell wall thickness of 2.5 mils, slurry a1 was applied from the inlet end face to a position 47.5 mm from the inlet end face, to achieve a supported amount after calcination of 39.45 g/L, and then dried at 150° C for 15 minutes and calcined at 550° C for 30 minutes to obtain D1 provided with an inlet side lower catalyst layer on a refractory three-dimensional structure.

Next, PMMA was added to the slurry a1 to achieve a ratio of 10 mass% (7.89 mass parts) with respect to the total solid content (78.9 mass parts) when the slurry a1 was heated to 1000° C, and the slurry was stirred with a Three-One Motor for 10 minutes. Next, the slurry d1 was prepared by wet milling the above in a ball mill to achieve an average secondary particle diameter of the solid content including PMMA in the slurry of 4.5 *µ*m. Slurry d1 was applied from the outlet end face of D1 to a position 47.5 mm from the outlet end face of D1, to achieve a supported amount after calcination of 39.45 g/L and after drying at 150° C for 15 min, the workpiece was held at 280° C in air for 10 min to form pores. Next, calcination was performed at 550° C for 30 minutes to obtain D2 provided with an inlet side lower catalyst layer, an intermediate area of 10 mm in length, and an outlet side lower catalyst layer on a refractory three-dimensional structure.

Next, slurry a2 was applied from the inlet end face to the outlet end face of D2 (total length 105 mm) to achieve a supported amount after calcination of 67.1 g/L and after drying at 150° C for 15 minutes, the workpiece was calcined at 550° C for 30 minutes to obtain a catalyst D provided with an inlet side lower catalyst layer, an intermediate area of 10 mm in length and an outlet side lower catalyst layer (with pores), and an upper catalyst layer on a refractory three-dimensional structure.

### Comparative Example 2

The slurry d1 obtained in Comparative Example 1 was applied to a similar cordierite carrier from the inlet end face to the outlet end face (total length 105 mm) to achieve a supported amount after calcination of 78.9 g/L and after drying at 150° C for 15 minutes, the workpiece was held at 280° C in air for 10 minutes to form pores. Next, the refractory three-dimensional structure was calcined at 550° C for 30 minutes to obtain E1 provided with a lower catalyst layer.

Slurry a2 was applied from the inlet end face to the outlet end face (total length 105 mm) to achieve a supported amount after calcination of 67.1 g/L and after drying at 150° C for 15 minutes and calcination at 550° C for 30 minutes, catalyst E provided with a lower catalyst layer (with pores) and an upper catalyst layer on a refractory three-dimensional structure was obtained.

### Comparative Example 3

Slurry a2 was applied to A1 obtained in example 1 from the inlet end face to the outlet end face (105 mm in total length) to achieve a supported amount after calcination of 67.1 g/L and after drying at 150° C for 15 minutes and calcination at 550° C for 30 minutes, catalyst F provided with a lower catalyst layer and an upper catalyst layer on a refractory three-dimensional structure was obtained.

### <Pore formation and thickness of the catalyst layers>.

For the catalysts A to F obtained in examples 1 to 3 and comparative examples 1 to 3, the catalyst layers in which pores were formed using a pore connecting agent are indicated by O, and the catalyst layers where no pore connecting agent was used are indicated by - in Table 1.

The thickness of each catalyst layer was also measured. The inlet end face and outlet end face of each catalyst were examined with a microscope, and the average thickness of the lower layer and upper catalyst layers of the five cells near the center of the end face was measured. The boundary portion was identified by the color change from the lower catalyst layer to the upper catalyst layer. Of the five cells, the thickness at the four corners was measured, and the average thickness of a total of 20 locations was obtained. Table 1 below shows the results.

**[Table 1]**

| | Catalyst | Lower catalyst layer (Pore formation) | | Lower catalyst layer thickness (*µ*m) | | Upper catalyst layer (Pore formation) | | Upper catalyst layer thickness (*µ*m) | | | Thickness ratio of the upper catalyst layer | | Average thickness (*µ*m) | | Average Thickness Ratio (Upper layer/lower layer) |
|---|---|---|---|---|---|---|---|---|---|---|---|---|---|---|---|
| | | Inlet side | Outlet side | Inlet side | Outlet side | Inlet side | Outlet side | Inlet side | Outlet side | Difference | Outlet side / Inlet side | Thick side / Thin side | Lower layer | Upper layer | |
| Example 1 | A | - | - | 42 | 44 | - | ○ | 39 | 58 | 19 | 1.49 | 1.49 | 43 | 48.5 | 1.13 |
| Example 2 | B | - | - | 44 | 42 | ○ | - | 58 | 39 | 19 | 0.67 | 1.49 | 43 | 48.5 | 1.13 |
| Example 3 | c | - | - | 43 | 43 | ○ | ○ | 61 | 60 | 1 | 0.98 | 1.02 | 43 | 60.5 | 1.41 |
| Comparative Example 1 | D | - | ○ | 41 | 52 | - | - | 39 | 40 | 1 | 1.03 | 1.03 | 46.5 | 39.5 | 0.85 |
| Comparative Example 2 | E | ○ | ○ | 55 | 53 | - | - | 41 | 40 | 1 | 0.97 | 1.03 | 54 | 40.5 | 0.75 |
| Comparative Example 3 | F | - | - | 43 | 42 | - | - | 38 | 38 | 0 | 1 | 1 | 42.5 | 38 | 0.89 |

### Thermal Aging and Phosphorus Poisoning

The catalysts A to F obtained in examples 1 to 3 and comparative examples 1 to 3 were respectively installed 25 cm downstream from the exhaust port of a V8, 4.6-liter engine. The engine was operated at an air-fuel ratio (A/F) at the catalyst inlet of 14.6 and a catalyst bed temperature of 1000° C and then was operated at a catalyst inlet A/F of 13.8, subsequently fuel supply was stopped, and this engine operation cycle was repeated for 100 hours, thus thermal aging was performed.

Next, each thermally aged catalyst was installed downstream of the exhaust port of a 3.0L engine using an engine oil with a phosphorus (P) concentration of 3000 ppm and operated at a catalyst bed temperature of 880° C as phosphorus poisoning process. The phosphorus content of each catalyst after the phosphorus poisoning process was analyzed by X-ray fluorescence (XRF). It was confirmed that about 2.6 g of phosphorus compound in terms of phosphorus oxide (P₂O₅) per liter of the refractory three-dimensional structure were contained therein.

### <Performance evaluation of exhaust gas purification catalysts>

After the phosphorus poisoning process, each catalyst was respectively installed 30 cm downstream from the exhaust port of a six-cylinder, 2.4-liter inline engine. Operation was performed with A/F of 14.6 and the catalyst bed temperature was raised from 100° C to 500° C at 1800° C/min. Gas discharged from the catalyst outlet was sampled, and the purification ratios of each of CO, HC, and NOₓ were calculated. The temperature at which each purification ratio reaches 20% is T20, and the time until T20 is reached is shown in FIG. 1. The shorter the time to reach T20 after the phosphorus poisoning process, the earlier 20% of the exhaust gas is purified, indicating that the exhaust gas purification performance is high even after the phosphorus poisoning process.

The results in FIG. 1 show that the catalyst of the present invention has high exhaust gas purification performance.

The present application is based on Japanese Patent Application No. 2018-247137 filed on December 28, 2018, the disclosed content of which is incorporated by reference in its entirety.

## Claims

1. An exhaust gas purification catalyst, comprising: at least two layers, a lower catalyst layer and upper catalyst layer, on a refractory three-dimensional structure, wherein the lower catalyst layer and upper catalyst layer independently comprise a precious metal, alumina, and cerium-zirconium composite oxide, and at least a portion of the upper catalyst layer is formed using a manufacturing method including:
applying a slurry for forming the upper catalyst layer onto the lower catalyst layer, the slurry comprising a pore connecting agent with a combustion decomposition temperature of 150° C or more to 400° C or less, a precious metal precursor, alumina, and cerium-zirconium composite oxide, the content ratio of the pore connecting agent being less than 20 mass% of the total solid content when heated to 1000° C; and
holding the workpiece in an oxygen-containing gas at a temperature above -150° C and +50° C or lower, relative to the combustion decomposition temperature.

2. The exhaust gas purification catalyst according to claim 1, wherein the ratio of the average thickness of the upper catalyst layer to the average thickness of the lower catalyst layer is 0.9 or more to 2.0 or less.

3. An exhaust gas purification catalyst, comprising: at least two layers, a lower catalyst layer and upper catalyst layer, on a refractory three-dimensional structure, wherein the lower catalyst layer and upper catalyst layer independently comprise a precious metal, alumina, and cerium-zirconium composite oxide, and the ratio of the average thickness of the upper catalyst layer to the average thickness of the lower catalyst layer is 0.9 or more to 2.0 or less.

4. The exhaust gas purification catalyst according to any one of claims 1 to 3, wherein the upper catalyst layer has an inlet side upper catalyst layer and an outlet side upper catalyst layer, and the ratio of the total amount of alumina and cerium-zirconium complex oxide contained per unit of length of the outlet side upper catalyst layer to the total amount of alumina and cerium-zirconium complex oxide contained per unit of length of the inlet side upper catalyst layer is 0.8 or more to 1.2 or less.

5. The exhaust gas purification catalyst according to claim 4, wherein the thickness of the inlet side upper catalyst layer is different from the thickness of the outlet side upper catalyst layer and the difference in thickness is 5 *µ*m or more to 85 *µ*m or less.

6. The exhaust gas purification catalyst according to claim 4 or 5, wherein the ratio of the thickness of the outlet side upper catalyst layer to the thickness of the inlet side upper catalyst layer is 1.1 or more to 3.9 or less.

7. The exhaust gas purification catalyst according to claim 4 or 5, wherein the ratio of the thickness of the outlet side upper catalyst layer to the thickness of the inlet side upper catalyst layer is 0.26 or more to 0.91 or less.

8. The exhaust gas purification catalyst according to any one of claims 4 to 7, wherein an intermediate area without the upper catalyst layer is provided from above 0 mm to 30 mm or less between the inlet side upper catalyst layer and the outlet side upper catalyst layer.

9. The exhaust gas purification catalyst according to any one of claims 1 to 8, wherein the precious metal included on the upper catalyst layer includes palladium and/or rhodium.

10. The exhaust gas purification catalyst according to any one of claims 1 to 9 which is a catalyst for purifying exhaust gas emitted from a gasoline engine.

11. A method for manufacturing an exhaust gas purification catalyst, comprising:
a step of forming a lower catalyst layer by applying a slurry for the lower catalyst layer including a precious metal precursor, alumina, and cerium-zirconium composite oxide onto a refractory three-dimensional structure and performing heat treatment; and
a step of applying onto the lower catalyst layer a slurry for an upper catalyst layer, the slurry containing a pore connecting agent with a combustion decomposition temperature of 150° C or more to 400° C or less, a precious metal precursor, alumina, and cerium-zirconium composite oxide, the content ratio of the pore connecting agent being less than 20 mass% of the total solid content when heated to 1000° C, and holding the workpiece in an oxygen-containing gas at a temperature above -150° C and +50° C or lower, relative to the combustion decomposition temperature, and then calcining.

12. A method of exhaust gas purification using the exhaust gas purification catalyst according to any one of claims 1 to 10 or an exhaust gas purification catalyst manufactured using the method for manufacturing according to claim 11 to purify exhaust gas including a phosphorus compound.
